# EUROPÄISCHE PATENTANMELDUNG

(11) **EP 2 404 852 A1**
(43) Veröffentlichungstag der Anmeldung: **11.01.2012**
(21) Anmeldenummer: 10401097.0
(22) Anmeldetag: 08.07.2010
(51) Int. Cl.: B65G 69/00, B66C 23/90

(54) **Standsicherheitskontrolleinrichtung für Fahrzeuge sowie ein Verfahren zur Kontrolle der Standsicherheit**

(71) Anmelder: AMF Fahrzeugbau GmbH, 31180 Giesen/Ahrbergen (DE)
(72) Erfinder: Voß, Michael, 30982 Pattensen (DE)
(74) Vertreter: Scheffler, Jörg

(57) **Zusammenfassung**

Die Erfindung betrifft eine Standsicherheitskontrolleinrichtung 1 für ein Nutzfahrzeug, welches mit einem Ladekran ausgestattet ist. Die Standsicherheitskontrolleinrichtung hat eine einem Rad 2 zugeordnete, bewegliche Bodenauflage 3 sowie einen Sensor 4 zur berührungslosen Erfassung einer Verlagerung des Rades 2 relativ zu einer Bodenfläche 5 des Rades 2. Hierzu hat der Sensor 4 einen Näherungsschalter, welcher unter Ausnutzung der magnetischen Eigenschaften einer Felge 7 des Rades 2 dessen vertikale Verlagerung erkennt. Sobald das Rad 2 den Erfassungsbereich verlassen hat, wird mittels des Sensors 4 ein Steuersignal ausgelöst, das drahtlos oder drahtgebunden an eine Steuereinheit des Ladekrans übertragen wird.

## Beschreibung

Die Erfindung betrifft eine Standsicherheitskontrolleinrichtung für Fahrzeuge, insbesondere für Lkw, mit einem Fahrwerk mit zumindest zwei Radachsen und mit einem insbesondere als Kran ausgeführten Hubmittel zum Bewegen von Lasten oder Personen, wobei das Fahrzeug vorzugsweise mehrere zwischen einer Arbeitsposition und einer Transportposition verstellbare, seitliche Abstützungen hat. Weiterhin betrifft die Erfindung ein derart ausgestattetes Kraftfahrzeug sowie ein Verfahren zur Kontrolle der Standsicherheit.

Solche derart mit einem Aufbau- oder Ladekran ausgestattete Fahrzeuge, insbesondere Nutzfahrzeuge, werden in der Praxis vielfach eingesetzt und dienen vor allem dem Be- und Entladen des mitgeführten Transportguts. Das meist als ausziehbarer Schwenk- oder Drehkran ausgeführte Hubmittel wird am Rahmen der Fahrzeuge befestigt. Damit der Rahmen wenigstens zum Teil entlastet und die Standbasis des Hubmittels erweitert werden kann, sind Abstützungen, meist in Form von Ausziehstützen, üblich.

Die europäische Norm DIN EN 12999 legt hierzu die Mindestanforderungen für Gestaltung, Berechnung, Untersuchungen und Prüfungen von hydraulisch angetriebenen Ladekranen und ihrer Montage auf Fahrzeugen oder ortsfesten Unterkonstruktionen fest.

Weiterhin ist aufgrund der Unfallverhütungsvorschrift "Krane" für alle Lkw-Ladekrane mit einem Hubmoment von mehr als 2 mt eine Lastmomentbegrenzungseinrichtung vorgeschrieben, die ein Überschreiten des zulässigen Lastmoments verhindern, jedoch solche Kranbewegungen, die eine Verringerung der Lastmomente zur Folge haben, weiterhin ermöglichen soll.

Um die Standsicherheit im gesamten Drehbereich des Krans sicherzustellen, ist die Krangröße bzw. Kranleistung je nach Abstützweite und Aufbauart durch das Leergewicht des Trägerfahrzeugs begrenzt. Die Standsicherheit eines zu montierenden Krans kann in ihrer maximalen Leistung durch eine größere Abstützweite oder durch den Einbau einer zusätzlichen Abstützbrücke zwar erhöht werden, durch derartige Maßnahmen wird jedoch das Eigengewicht des Krans vergrößert und damit entsprechend die Nutzlast des Fahrzeugs reduziert, sodass insgesamt mit solchen Maßnahmen erhebliche Mehrkosten in Kauf genommen werden müssen.

Die DE 196 37 124 A1 beschreibt bereits eine Standsicherheitskontrolleinrichtung für Lkw-Hubeinrichtungen, insbesondere Lkw-Ladekrane. Um die Lastmomentbegrenzungseinrichtung in ihrer Funktion einfach und zuverlässig zu gestalten, werden die Standsicherheit und die Hubleistung des Ladekrans selbsttätig und fortlaufend dem jeweiligen Beladungszustand des Trägerfahrzeugs angepasst und das Hubmoment vergrößernde Kranfunktionen bei für die maximale Hubleistung des Krans nicht ausreichendem Fahrzeuggewicht selbsttätig abgeschaltet bzw. blockiert. Ein Vorteil dieser vollautomatischen Standsicherheits-Regulierung ist es, dass der Kran erst dann voll funktionsfähig ist, wenn die Stützzylinder bis zu einer fest vorgegebenen, einstellbaren Höhe ausgefahren sind. Wird diese Höhe überschritten oder unterschritten, werden alle die Lastmomente vergrößernden Funktionen blockiert. Eine optimale Standsicherheit des Ladekrans ist auch dann gewährleistet, wenn die seitlichen Abstützträger der Stützbeine bei beengten Platzverhältnissen nicht voll ausgefahren werden können, ein Zustand, der in der Praxis sehr häufig auftritt. Hierbei wird der Grenzbereich der Standsicherheit akustisch und/oder optisch angezeigt.

Aus der DE 2 221 419 A1 ist bereits eine Überlast-Sicherheitseinrichtung bekannt geworden, bei welcher der im Auslegerzylinder wirkende Arbeitsdruck gemessen wird und welche bei Überschreiten eines vorbestimmten Drucks eine Warnanlage in Betrieb setzt.

Die EP 0 076 249 A1 betrifft eine Überlast-Sicherheitseinrichtung für fahrbare Ladegeräte mit einem hydraulisch betätigbaren, heb-, senk- und schwenkbaren Ausleger, an welchem für Kranarbeiten Lasten festlegbar sind, mit wenigstens einem den Druck des Hubzylinders überwachenden Sensor, der beim Überschreiten eines vorbestimmten Drucks anspricht. Durch die ein Verschwenken des Auslegers überwachende Einrichtung kann dem Umstand Rechnung getragen werden, dass die Belastung des Auslegers bei Geradeausstellung des Auslegers andere Werte annehmen darf als die Belastung bei einer Verschwenkung des Auslegers aus der Geradeausstellung heraus.

Die DE 28 34 811 A1 betrifft einen Aufbaukran mit Abstützung, durch den das bei der Kranarbeit zur Verfügung stehende Standmoment von Fahrzeug und Kran ohne Verstärkungen an dem Fahrzeugrahmen voll ausgenutzt werden kann, ebenso wie die vorhandene Gesamtleistung des Fahrzeugmotors ohne Änderung am Fahrzeug bzw. an dessen Triebwerk. Hierzu liegen die Bodenabstützungen des Aufbaudrehkrans bzw. deren Stützteller zur Kranarbeit nicht nur auf dem Boden auf, sondern können auch zusätzlich unter die Räder des Fahrzeugs geschoben werden, sodass das Fahrzeug direkt auf den Stütztellern zu stehen kommt. Somit steht bei Belastung des Aufbaudrehkrans der Kran mit Fahrzeug auf dem Boden, wobei das Fahrzeug nur noch als Gegengewicht dient und nicht oder nur unwesentlich vom Kran belastet wird. Das Unterschieben der Bodenabstützungen unter die Räder des Fahrzeugs geschieht mindestens an zwei Rädern gleichzeitig, an einem Rad der Vorderachse und einem der Hinterachse auf einer Seite des Fahrzeugs, um ein einseitiges Verschieben des auf das Fahrzeug aufgeleiteten Krans möglichst zu vermeiden oder auf ein Mindestmaß einzuschränken.

Die WO 2009/049335 A1 betrifft eine Abstützverbreiterung für Lastfahrzeuge mit einem Ladekran mit wenigstens einem zwischen einer Arbeitsposition und einer Transportposition verstellbaren Seitenausleger. Dabei zeigt die Signaleinrichtung neben der Transportposition des Seitenauslegers zusätzlich den Zustand der Verriegelungseinrichtung an, insbesondere, ob der Seitenausleger in der Transportposition verriegelt ist.

Die WO 95/16630 A1 bezieht sich auf eine hydraulische Steuereinrichtung für einen Ladekran, wobei durch nebeneinander angeordnete, mittels Schalthebeln betätigbare Steuerschieber einerseits verschiedene Funktionen des Krans selbst, andererseits verschiedene Funktionen einer Hilfseinrichtung, insbesondere einer Abstützeinrichtung für das den Kran tragende Lastfahrzeug, aktivierbar sind.

Es wurde weiterhin bereits vorgeschlagen, am Ausleger Dehnungsmessstreifen in Ausfräsungen anzuordnen. Derartige Ausfräsungen stellen aber eine Schwächung des Auslegers dar und sind daher unbefriedigend.

In der Praxis hat sich herausgestellt, dass die Abstützungen oftmals nicht oder nicht in der vorgeschriebenen Weise in die Arbeitsposition bewegt werden. Beispielsweise können räumliche Einschränkungen oder die Beschaffenheit des Untergrunds das Erreichen der Arbeitsposition beeinträchtigen. Die damit einhergehende Reduzierung der maximal zulässigen Belastung muss daher von dem Bediener entsprechend ermittelt und berücksichtigt werden. Hierbei können Fehler nicht zuverlässig ausgeschlossen werden.

Vor diesem Hintergrund liegt der Erfindung die Aufgabe zugrunde, eine Möglichkeit zu schaffen, die Standsicherheit des Fahrzeugs in die Sicherheitsfunktion einzubeziehen. Insbesondere sollen die durch die Umstände des Fahrzeugseinsatzes bestimmten Einflussgrößen noch besser als bisher Berücksichtigung finden. Dabei soll die maximale Belastung situationsabhängig und automatisiert bestimmt werden, um so den Bediener von umständlichen Berechnungen zu entlasten und zugleich die erzielbare Arbeitssicherheit zu verbessern.

Die Aufgabe wird erfindungsgemäß mit einer Standsicherheitskontrolleinrichtung für Straßenfahrzeuge gemäß den Merkmalen des Anspruchs 1 gelöst. Die weitere Ausgestaltung der Erfindung ist den Unteransprüchen zu entnehmen.

Erfindungsgemäß weist also eine Standsicherheitskontrolleinrichtung mehrere, jeweils einem von zumindest vier Rädern zugeordnete, bewegliche Bodenauflagen mit einem Sensor zur Erfassung einer jeweiligen Verlagerung des Rades relativ zu einer Bodenfläche auf. In überraschend einfacher Weise wird dadurch die Standsicherheit unter allen in der Praxis auftretenden Bedingungen wesentlich erhöht, indem als Bezugsgröße für die Signalauslösung eine mögliche Verlagerung des jeweils überwachten Rades relativ zu der Bodenfläche zugrunde gelegt wird. Im Gegensatz zu den in der Praxis zu beobachtenden Bemühungen, möglichst viele Messwerte zu erfassen, wie insbesondere das Gewicht der Beladung, die Position und Orientierung des Kranauslegers sowie die genaue Ausfahrposition der Abstützung, beschränkt sich die Erfindung im Wesentlichen auf die Erfassung der Radposition. Auf diese Weise wird sichergestellt, dass zumindest ein durch die Handbremse gebremstes Rad in Kontakt mit dem Boden bleibt. Dabei wird jedoch nicht nur die Standsicherheit erhöht und die Signalverarbeitung vereinfacht, sondern auch die Handhabung des Ladekrans erleichtert, indem nämlich bevorzugt auf einer der Last abgewandten Seite ein oder mehrere Räder entsprechend überwacht werden. Zudem kann auf eine Abstützung verzichtet werden, wenn die zu hebende Last gering und das Eigengewicht des Fahrzeugs einschließlich seiner Beladung verhältnismäßig groß ist. So entfällt auch das umständliche Ausfahren der Abstützungen. Aufgrund der geringen Anzahl der zu verarbeitenden Signale ist zudem eine Störanfälligkeit der Steuerung wesentlich vermindert, sodass die Betriebssicherheit auch in dieser Hinsicht erhöht ist. Auch die jährlich erforderliche Prüfung der Kran- und Abstützpositionsüberwachung und die damit verbundenen, unterschiedlichen Lasteinstellungen des Kranes werden dadurch erheblich vereinfacht.

Eine besonders vorteilhafte Ausgestaltung der Erfindung wird dann erreicht, wenn mittels des Sensors eine Veränderung des Abstands der Radachse von der Bodenfläche oder das Verlassen des Rades aus einem vordefinierten Bereich erfassbar ist. Hierdurch wird zur Signalauslösung beispielsweise der bekannte Abstand zwischen der Radachse und der Bodenfläche als Referenzwert berücksichtigt, sodass insbesondere ein zunehmender Abstand als Indiz für einen abnehmenden Bodenkontakt gewertet werden kann. Dabei kommt es nicht auf die betragsmäßige Bestimmung des Abstands, sondern im Wesentlichen auf dessen Veränderung bzw. auf die Feststellung an, ob sich die als Referenz herangezogenen Bereiche des Rades innerhalb eines Überwachungsbereichs befinden oder nicht. Zweckmäßigerweise wird so zugleich die korrekte Anordnung der Bodenauflage durch den Bediener sichergestellt.

Alternativ ist es möglich, die gegenüberliegenden Kontaktlinien beiderseits der Umfangsfläche des Rades auf der Bodenfläche als vordere und hintere Begrenzung der Bodenaufstandsfläche des Rades und deren bei Be- oder Entlastung veränderte Positionen zu erfassen.

Besonders zweckmäßig ist eine Ausgestaltung, bei welcher mittels des Sensors die elektrischen und/oder magnetischen Eigenschaften der Felge zur berührungslosen Bestimmung einer Position oder eines Aufenthaltsraums des Rades erfassbar sind. Auf diese Weise kann auf die dauerhafte oder vorübergehende Montage einer Referenzmarke an dem Rad verzichtet werden, indem die Felge als Referenz genutzt wird.

Hierzu eignet sich vorzugsweise eine Abwandlung, bei welcher der Sensor als ein Näherungsschalter ausgeführt ist, welcher auf Annäherung und ohne direkten Kontakt berührungsfrei reagiert. Der Sensor dient dabei zur Positionserkennung des Rades bzw. als Auslöser von Sicherheitsmaßnahmen. Beispielsweise kann ein induktiver Näherungsschalter sowohl bei ferromagnetischen als auch bei nicht-magnetischen metallischen Gegenständen eingesetzt werden, während kapazitive Näherungsschalter auch auf nicht-leitende Werkstoffe reagieren. Ferner sind magnetische, optische sowie elektromagnetische Näherungsschalter einsetzbar.

Die Bodenauflage könnte durch eine elektrische Leitung, beispielsweise auch mittels einer Steckverbindung, mit der Steuereinheit des Hubmittels sowie gegebenenfalls einer elektrischen Energieversorgung verbunden sein. Entsprechend der Anordnung der Bodenauflagen an dem Fahrzeug ist somit zugleich auch eine Zuordnung des empfangenen Signals zu einem bestimmten Rad möglich. Bei einer anderen vorteilhaften Variante, bei welcher die Bodenauflage bedarfsweise bei unterschiedlichen Fahrzeugen einsetzbar ist, ist mittels des Sensors ein Steuersignal auslösbar, welches drahtgebunden oder drahtlos an eine Steuereinheit des Ladekrans übertragen wird.

Für eine reproduzierbare Positionierung der Bodenauflage ist es besonders von Vorteil, wenn die Bodenauflage benachbart zu einer Umfangsfläche des Rades mit einer konkaven Ausformung anlegbar und beispielsweise zugleich als ein Unterlegkeil ausgeführt ist, um so durch die definierte Relativposition der Bodenauflage gegenüber dem Rad zuverlässig beispielsweise den jeweils oberen oder unteren Umfangspunkt der Felge zu erfassen.

In ähnlicher Weise lässt sich die Positioniergenauigkeit und die Zuverlässigkeit der Signalerfassung auch noch gemäß einer Erfolg versprechenden Weiterbildung dadurch erreichen, dass die Bodenauflage beiderseits einer Aufstandsfläche des Rades auf der Bodenfläche gegen die Umfangsfläche des Rades anlegbar ist.

Grundsätzlich könnte die Bodenauflage automatisiert oder teilautomatisiert auf die Bodenfläche, vorzugsweise in Achsrichtung vor der Felge abgesenkt werden. Besonders einfach ist hingegen eine Abwandlung, bei welcher die Bodenauflage manuell und unabhängig von den Abstützungen beweglich ist und von dem Bediener vor der Betätigung des Krans aus einer Halterung entnommen und in der vorgesehenen Position relativ zu dem Rad auf der Bodenfläche abgelegt wird.

Weiterhin erweist es sich als besonders sinnvoll, wenn die Standsicherheitskontrolleinrichtung mehrere, jeweils einem Rad oder Radpaar zugeordnete Bodenauflagen aufweist, sodass zugleich alle Räder bzw. Radpaare als Zwillingsbereifung hinsichtlich einer ausreichenden Aufstandsfläche und Belastung überwacht werden können. Ein den weiteren Betrieb limitierendes Signal kann bei einer Überwachung aller Räder bereits bei fehlender Aufstandsfläche an einem einzigen Rad ausgelöst werden.

Das Hubmittel kann nahezu beliebige Ausführungsformen umfassen. Besonders praxisnah ist es, wenn das Hubmittel einen Aufbaukran als Schwenk- oder Drehkran hat und einen hydraulisch betätigbaren, heb-, senk-, schwenk- und/oder ausfahrbaren Ausleger aufweist. Selbstverständlich ist die Erfindung nicht auf ein einziges Hubmittel an dem Fahrzeug beschränkt.

Ferner sollen im Sinne der Erfindung unter dem Begriff der Straßenfahrzeuge, auch antriebslose Anhänger, Auflieger oder dergleichen verstanden werden. Weiterhin können die Abstützungen als Ausziehstützen mit Stützzylindern oder Stützstempeln ausgeführt sein.

Die erfindungsgemäße Aufgabe wird weiterhin noch mit einem Kraftfahrzeug mit einer Standsicherheitskontrolleinrichtung nach zumindest einem der vorhergehenden Ansprüche sowie mit einem Verfahren zur Kontrolle der Standsicherheit eines Straßenfahrzeugs zur Anwendung bei der Standsicherheitskontrolleinrichtung mit einer Steuereinheit zur Erfassung der Lastzustände und zur Kontrolle von Sicherheitsfunktionen während des Betriebs eines Hubmittels als Signal eines Sensors dadurch gelöst, dass eine Verlagerung des Rades relativ zu der Bodenfläche durch den Sensor erfasst und ein Steuersignal ausgelöst wird, um so mit einem minimalen Aufwand nicht etwa nur den Lastzustand rechnerisch zu ermitteln, sondern vielmehr die Auswirkung der Last auf die einzelnen Räder als sich verändernde Aufstandsfläche oder die Höhe der Radachse als Indikator zu nutzen.

Hierzu eignet sich eine Ausgestaltung des Verfahrens, bei der ein Abheben des Rades erfasst und durch die Steuereinheit des Ladekrans ein Signal zur Unterbrechung der Betätigung des Hubmittels ausgelöst wird.

Die Erfindung lässt verschiedene Ausführungsformen zu. Zur weiteren Verdeutlichung ihres Grundprinzips ist eine davon in der Zeichnung dargestellt und wird nachfolgend beschrieben.
Diese zeigt in
- Fig. 1: eine für ein Kraftfahrzeug bestimmte Standsicherheitskontrolleinrichtung in einer Vorderansicht;
- Fig. 2: eine Seitenansicht der in Figur 1 gezeigten Standsicherheitskontrolleinrichtung.

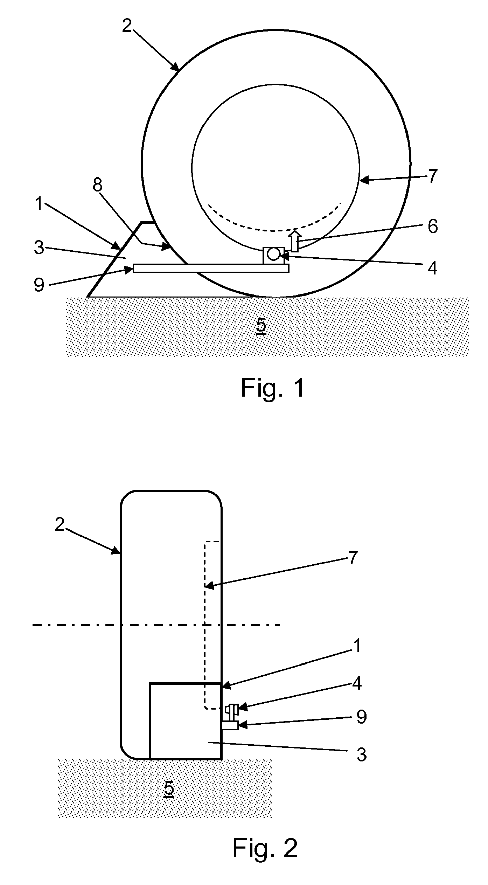

Die erfindungsgemäße Standsicherheitskontrolleinrichtung 1 für ein nicht dargestelltes Nutzfahrzeug wird nachstehend anhand der Figuren 1 und 2 in einer Vorderansicht sowie in einer Seitenansicht näher dargestellt. Die Standsicherheitskontrolleinrichtung 1 dient der Überwachung zumindest eines exemplarisch dargestellten Rades 2 des Nutzfahrzeugs, dessen Ladekran zu wechselnden Lastzuständen führt. Die Standsicherheitskontrolleinrichtung 1 hat eine einem Rad 2 zugeordnete, bewegliche Bodenauflage 3 sowie einen Sensor 4 zur berührungslosen Erfassung einer Verlagerung des Rades 2 relativ zu einer Bodenfläche 5 des Rades 2 in Pfeilrichtung 6 aus einem vordefinierten Erfassungsbereich heraus. Hierzu hat der Sensor 4 einen berührungslosen Näherungsschalter, welcher unter Ausnutzung der magnetischen Eigenschaften einer Felge 7 des Rades 2 dessen vertikale Verlagerung erkennt. Sobald das Rad 2 den Erfassungsbereich verlassen hat, wird mittels des Sensors 4 ein Steuersignal ausgelöst, das an eine Steuereinheit des Ladekrans übertragen wird. Zur Positionierung hat die Bodenauflage 3 eine konkave Ausformung 8, mit der die Bodenauflage 3 formschlüssig gegen den Umfang des Rades 2 anlegbar ist und so zugleich als ein Unterlegkeil zum Schutz gegen Wegrollen dient. Durch diese definierte Relativposition der Bodenauflage 3 gegenüber dem Rad 2 wird zugleich die Erfassung des jeweils unteren Randes der Felge 7 durch den Sensor 4 sichergestellt, der in entsprechendem Abstand zu der Ausformung 8 an einem Ausleger 9 fixiert ist.

## Patentansprüche

1. Standsicherheitskontrolleinrichtung (1) für Fahrzeuge, insbesondere für Lkw, mit einem Fahrwerk mit zumindest zwei Radachsen und mit einem insbesondere als Kran ausgeführten Hubmittel zum Bewegen von Lasten und/oder Personen, **dadurch gekennzeichnet, dass** die Standsicherheitskontrolleinrichtung (1) zumindest eine einem Rad (2) zugeordnete, bewegliche Bodenauflage (3) sowie einen Sensor (4) zur Erfassung einer Verlagerung des Rades (2) relativ zu einer Bodenfläche (5) aufweist.

2. Standsicherheitskontrolleinrichtung (1) nach Anspruch 1, **dadurch gekennzeichnet, dass** mittels des Sensors (4) eine Veränderung des Abstands der Radachse von der Bodenfläche (5) und/oder das Verlassen des Rades (2) aus einem vordefinierten Bereich erfassbar ist.

3. Standsicherheitskontrolleinrichtung (1) nach den Ansprüchen 1 oder 2, **dadurch gekennzeichnet, dass** mittels des Sensors (4) eine Reduzierung oder Aufhebung der Bodenaufstandsfläche des Rades (2) erfassbar ist.

4. Standsicherheitskontrolleinrichtung (1) nach zumindest einem der vorhergehenden Ansprüche, **dadurch gekennzeichnet, dass** mittels des Sensors (4) die elektrischen und/oder magnetischen Eigenschaften der Felge (7) zur berührungslosen Bestimmung einer Position oder eines Aufenthaltsraums des Rades (2) erfassbar sind.

5. Standsicherheitskontrolleinrichtung (1) nach zumindest einem der vorhergehenden Ansprüche, **dadurch gekennzeichnet, dass** der Sensor (4) als ein Näherungsschalter ausgeführt ist.

6. Standsicherheitskontrolleinrichtung (1) nach zumindest einem der vorhergehenden Ansprüche, **dadurch gekennzeichnet, dass** mittels des Sensors (4) ein Steuersignal auslösbar und drahtgebunden oder drahtlos an eine Steuereinheit übertragbar ist.

7. Standsicherheitskontrolleinrichtung (1) nach zumindest einem der vorhergehenden Ansprüche, **dadurch gekennzeichnet, dass** die Bodenauflage (3) benachbart zu einer Umfangsfläche des Rades (2) mit einer konkaven Ausformung (8) anlegbar ist.

8. Standsicherheitskontrolleinrichtung (1) nach zumindest einem der vorhergehenden Ansprüche, **dadurch gekennzeichnet, dass** die Bodenauflage (3) beiderseits einer Aufstandsfläche des Rades (2) auf der Bodenfläche (5) gegen die Umfangsfläche des Rades (2) anlegbar ist.

9. Standsicherheitskontrolleinrichtung (1) nach zumindest einem der vorhergehenden Ansprüche, **dadurch gekennzeichnet, dass** die Bodenauflage (3) manuell und unabhängig von einer Abstützung beweglich ist.

10. Standsicherheitskontrolleinrichtung (1) nach zumindest einem der vorhergehenden Ansprüche, **dadurch gekennzeichnet, dass** die Standsicherheitskontrolleinrichtung (1) mehrere jeweils einem Rad (2) oder Radpaar zugeordnete Bodenauflagen (3) aufweist.

11. Kraftfahrzeug mit einer Standsicherheitskontrolleinrichtung (1) nach zumindest einem der vorhergehenden Ansprüche.

12. Verfahren zur Kontrolle der Standsicherheit eines Straßenfahrzeugs, insbesondere eines Nutzfahrzeugs, bei dem Lastzustände erfasst und Sicherheitsfunktionen während des Betriebs eines Hubmittels überwacht werden, **dadurch gekennzeichnet, dass** eine Verlagerung des Rades (2) relativ zu der Bodenfläche (5) durch den Sensor (4) erfasst und ein Steuersignal ausgelöst wird.

13. Verfahren nach Anspruch 12, **dadurch gekennzeichnet, dass** ein Abheben des Rades (2) erfasst wird und ein Signal zur Unterbrechung der Betätigung des Hubmittels ausgelöst wird.
